# EUROPEAN PATENT SPECIFICATION

(11) **EP 1 127 457 B1**
(45) Date of publication and mention of the grant of the patent: **24.07.2002**
(21) Application number: 99950968.0
(22) Date of filing: 22.10.1999
(51) Int. Cl.: H04N 5/262

(54) **INTERACTIVE VIDEO SYSTEM**
INTERAKTIVES VIDEOSYSTEM
VIDEO ET TELEVISION INTERACTIVES

(30) Priority: 07.11.1998 GB 9824334
(43) Date of publication of application: 29.08.2001
(73) Proprietor: Orad Hi-Tec Systems Limited, 44425 Kfar Saba (IL)
(72) Inventor: BEN DAVID, Tamir, Ramat Gan (IL)
(74) Representative: Fox-Male, Nicholas Vincent Humbert
(86) International application number: GB9903514
(87) International publication number: WO0028731

(56) References cited:
- WO-A-96/24216
- WO-A-97/02699
- WO-A-98/46029
- US-A- 5 642 285

## Description

The present invention relates to video and television systems, and more particularly to such systems that enable the viewer to interact with a video image of a three dimensional scene in a way that pointing to an intrinsic point or object in the image will activate visual or/and acoustical effects to be presented to the viewer.

The present invention describes a system that comprises means for identifying the video cameras, means for tracking the camera's position and orientation and field of view size (position in *x*,*y*,*z*, zoom, tilt, roll, pan) and means for tracking static and moving objects in three dimensional space presented in the captured scene. In addition the system comprises means to combine data related to the video, the camera's identification, the camera's position and orientation and field of view size, the objects tracking information and the video image. The system further comprises means to transmit the combined data to the viewer together with a synchronisation time code. In addition the system comprises means to receive the transmitted data and means to enable the viewer to interact with the received data, in particular means to point to objects appearing in the captured three dimensional scene, or means to navigate in a three dimensional scene. In addition the system comprises means to identify marked objects or points and track them with time using the received camera's position and orientation and field of view size. The system also comprises means to present additional data that was transmitted with the video image, or to manipulate the video image at the request of the viewer. In addition the system comprises means that enables the viewer to transmit data back the broadcaster.

Tracking of camera position and orientation and field of view size (position in *x*,*y*,*z*, zoom, tilt, roll, pan) is a common technique used especially in virtual studios or electronic advertising in sport. Knowing the camera position and orientation and field of view size enables a studio controller to perform several actions automatically like: replacing chroma key billboard in a three dimensional scene, tracking static objects and combining additional foreground objects, real or computer generated objects into a video scene. There are three main techniques to capture the camera position and orientation and field of view size. The first one is based on electro-mechanical or electro-optical sensors that are located on the camera and measure the rotation axes (tilt, roll and pan) and the status of the zoom and focus engine. The second one is based on image processing of the video sequence, and this can be done by pattern recognition of a visible pattern in the image or by calculating the relative correlation from frame to frame. The third technique is by tracking the motion of markers placed on the camera. By knowing the camera position and orientation and field of view size it is possible to find automatically the exact position of any object in the video image at any time using initial positioning data at a certain time, regardless of any change of the camera position and orientation and field of view size (position in *x*,*y*,*z*, zoom, pan, tilt, roll) during the video film sequence.

Present known systems such as described in WO 95/10915 allow an object to be tracked by identification of the object at the transmitting end. These are used in television video replays to enable an object to be highlighted. Tracking moving objects in a video sequence is mainly used in sport broadcast or in virtual studios where the position of the actors is important. There are mainly two techniques to track an object in a scene, first by image processing and second by tracking sensors, markers, receivers or any marking tag both by optical and electronic means. Tracking the position of the object in the video image enables manipulation of the image with regard to the object position and display of features like object highlight, path marking, panoramic view of the object path and addition of text near the object.

Traditional television or video broadcast involves one way direction of image information from video suppliers such as television stations, cable networks, Internet and local video suppliers to the watching audience. The watcher receives the video data via a television set or other type of visualisation media like computers in a passive way that does not allow the viewer to influence the image appearing in the visualisation media.

WO-A-9 846 029 discloses a system for tracking objects during sport events. US-A-5 642 285 relates to a GPS position detector for video systems and cameras. WO-A-9624216 shows a system with means for detecting a camera position, angles, tilt, and a joystick for navigating through 3D images.

Together with the conventional broadcast there are basic interactive systems that enable the watcher to receive text information as in teletext or pointing on specific areas in the two dimensional image as in webTV that activate basic processes like opening a web page or displaying text. At the present there is no system that can react to pointing at intrinsic objects or points captured with a non static video camera, or moving objects captured with a static camera. At the present state, there is no system that transmits to the watcher combined information on the camera's position and orientation and field of view size on one hand and positioning of objects and selected points in the scene together with the image data, a receiving system located on the watcher side to receive the information and enabling the watcher to interact with objects and points in the transmitted video.

The problem with such systems is that the viewer has no control over the highlighted or tracked object. It is an object of the present invention to provide an interactive video and television system which will enable individual viewers to operate the system in several ways: First to get more information related to stable and moving objects by pointing on them. The information can be textual or visual details relating to the object. Second, to select objects from the overall scene and activate a feedback action appearing on the screen or sending the identity of the selected object back to the broadcaster, for example a multiple choice answer in an education program, active voting or automatically purchasing of objects. Third to initiate actions by pointing to an object or a specific point or area in the image which will result in enhancement and modification of the image in a desired manner, or even presenting additional images together with the original image, for example highlighting objects, adding graphic overlays, opening new video windows and changing textures and colours. Each viewer may initiate different actions to suit a particular requirement and thus the system enables viewers to control data on the screen relating to their own selection of events.

In a specific embodiment, the present invention relates to interactive abilities of a video watcher and more particularly the possibility of the video watcher to interact with the video image in a way that pointing out on a point or an object in the captured scene image will activate an action that will be heard or appear in the image.

In a preferred embodiment the present invention provides a system that identifies the video cameras, tracks the camera's position and orientation and field of view size, tracks any static or moving objects presented in the scene and also produce a synchronisation time code. Transmission of this information together or in parallel with the video signal enables identification of the co-ordinates in the image of objects or selected points appearing in the video image in real or virtual world.

The present invention therefore provides an interactive video and television system including video camera means comprising one or more video cameras for video shooting/recording a scene at an original scene location, means to identify the video cameras, means for capturing the camera position and orientation and field of view size in each video field, means for identifying the location of one or more objects and generating data relating to the location of said one or more objects in the captured scene which are present in the scene for at least a period of time, means for recording or transmitting the video recorded images to enable a viewer to view the scene at a location remote from the original scene location, said means including means for recording or transmitting the data relating to the camera's position and orientation and field of view size and the identity and location of said one or more objects to enable said viewer at said remote location to interrogate said data, means to generate a time code to synchronise between the video image and the data related to this image.

Preferably, the data relating to camera position and orientation and field of view size together or without the location of said one or more objects is transmitted together with the video signal and a synchronisation time code. In a specific embodiment the data may be transmitted in the vertical blanking interval or any other coded means in each video field. Alternatively the data relating to the location of said one or more objects may be transmitted separately by external means separate from the video signal via, for example, an additional transmission channel.

In a preferred embodiment the data concerning the position of an object is transmitted only in a first video frame and the camera position and orientation and field of view size and a time code are preferably transmitted in every frame. The receiving apparatus records the initial position of the object in a first, specified frame, with the camera position and orientation and field of view size pertaining in that frame. The receiving apparatus can thereafter determine the position of any object in any succeeding frame by reference to the camera position and orientation and field of view size.

In another embodiment the position of the objects is first calculated and transmitted in every frame together with the image data, the camera position and orientation and field of view size and time code.

The broadcast system may in a further embodiment transmit also "hidden" data which will not be seen automatically by the viewer. The viewer can, however, select such data by, for example, clicking onto an object on the screen. Because the processor in the receiving apparatus knows the position of each object on the TV screen, by virtue of the initial position information and subsequent camera position and orientation and field of view size information, it is possible to identify the marked object. The hidden data relating to that object can be recovered for display either, for example, as an overlay or on a split screen display, as an insert or on a separate monitor if provided.

The system therefore enables objects in a 3D world to be interrogated as if they were in a 2D world.

The system also comprises receiving apparatus including a processor unit and a display unit that may be separate or may preferably be combined into a single unit. The processing unit preferably comprises graphical video and computational capabilities enabling overlay of computer generated graphics and computation of video data combined with computed information.

The system therefore enables the viewer to generate data in relation to selected objects, either live or in a video replay situation, because the data relating to location of objects on a video sequence is available to the viewer at a remote location.

Preferably the receiving apparatus can transmit data relating to an object displayed on said TV to indicate a preference to a broadcaster or intermediate party.

Embodiments of the present invention will now be described, by way of example, with reference to the accompanying drawings in which :-
Figure 1 shows a video transmitting equipment in accordance with the present invention;
Figure 2 shows a video receiving equipment in accordance with the present invention for co-operation with the transmission apparatus of Figure 1.
Figure 3 shows an alternative embodiment of the present invention illustrating a transmission system: and
Figure 4 shows a receiving system suitable for the transmission system of Figure 3.

The present invention will now be described with reference to the drawings. The advantages and inventive features of the present invention will become apparent by a comparison with known television systems in which camera tracking is used.

The present invention proposes a new configuration for transmitting data for all types of video broadcast and display. The new configuration is characterised by composing ordinary video data, information on the camera position and orientation and field of view size and object positioning and any information relating to objects in the video image or to the video image in general. For each image in the video sequence the following information is attached: camera identification number, camera position and orientation and field of view size for the specific frame, positioning or displacement of selected moving or static objects in the captured scene, for static objects or points the initial position can be sent only once, for the following frames the relevant position of the objects in the image can be calculated using the camera position and orientation and field of view size (position in *x*,*y*,*z*, pan, tilt, roll and zoom) attached to frame. The additional information regarding the camera and the selected objects can be on one hand integrated with the image by encoding the information into the image, or encoding the information into the vertical blanking interval (VBI) or other means to transmit the information together with the image data. On the other hand it can be sent by external means separate from the video signal via additional transmission channel, such as telephone wires, Internet, special television channels, cable channels or any other transporting means. The cameras and the objects information should be synchronised with the video sequence in such a way that will enable the receiver side to use the transmitted information for the correct video image.

The video data together with information on the cameras identification, cameras position and orientation and field of view size, the objects position or displacement, synchronisation time code and any information relating to objects in the video image or to the video image in general are receiving by a processing unit that may be separate or combined with the displaying unit. The processing unit is also comprised of a graphical, video and computational abilities that enable manipulation of the received video data and / or to overlay additional image or graphics onto the video data.

Preferred embodiments of the present invention will now be described:

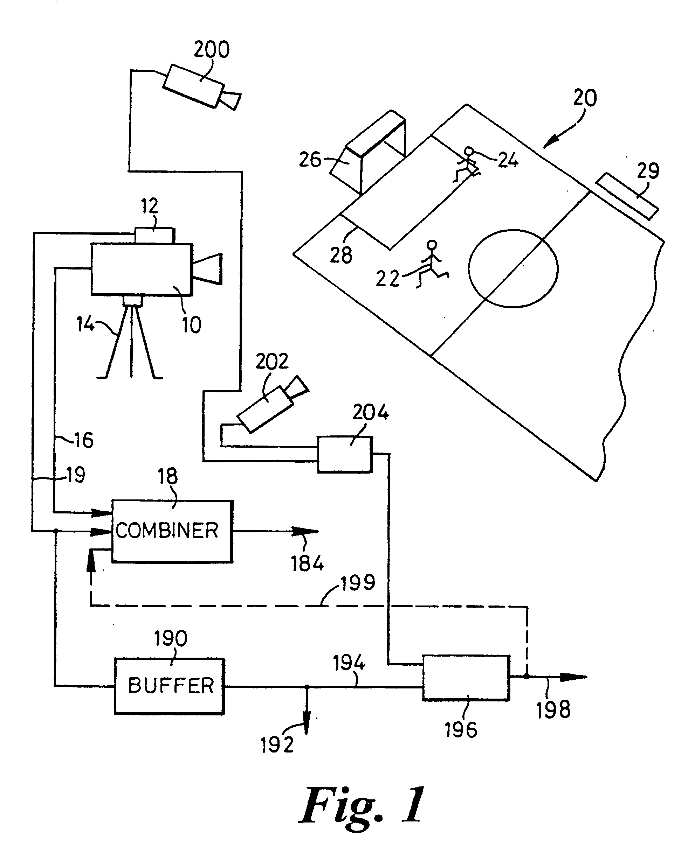

Figures 1 shows a transmission system comprising a first video camera 10 which is positioned to video a scene 20 comprising a football pitch with players 22,24 goal post 26 and penalty area 28. Other features on the pitch may be used but particular reference will be made to these features by way of example.

The video camera 10 is preferable equipped with camera position and orientation and field of view size (position in *x*,*y*,*z*, pan, tilt, roll and zoom) sensor means 12 which senses the required camera position and orientation and field of view size as described hereinbefore.

The camera is mounted on a tripod 14 to enable the camera to pan and tilt in addition to its normal zooming function.

The video output of camera 10 is fed via cable 16 to a combiner circuit 18 to which is also connected the data output from sensor means 12 via cable 19.

The output of combiner circuit 18 is used as a transmitted video output 184. Alternatively, the camera data from sensor means 12 may be connected to a buffer 190 which may also act as a coder and transmitter to transmit the camera data separately via output 192 or to forward the data to a further combiner circuit 196 via line 194 where the data may be combined as described hereafter.

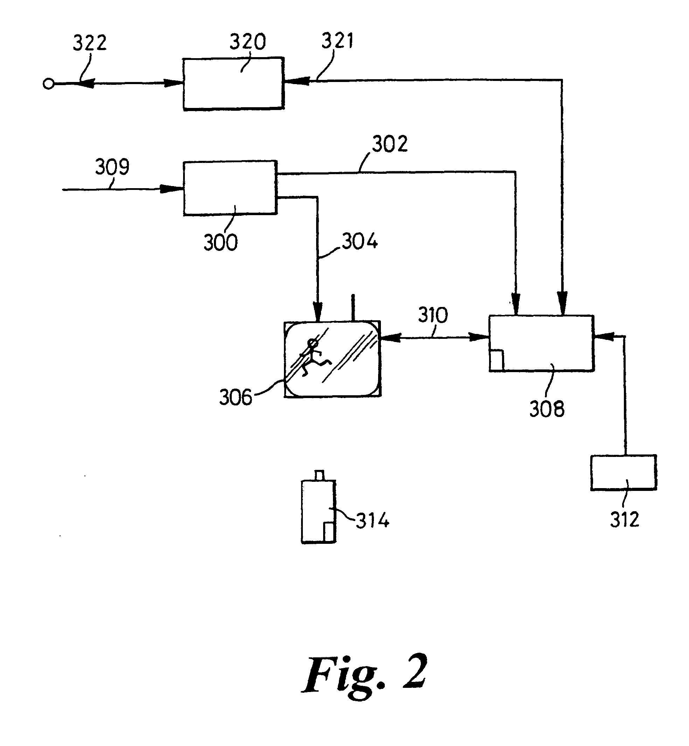

The outputs 184 (video) and 192 (camera position and orientation and field of view size) may be transmitted to a viewer to provide the viewer with information allowing the viewer to manipulate the received video signal. The camera 10 will transmit the view of the pitch 20 which includes several feature points such as the goal 26 and penalty box 28. Other features such as the corners, halfway line etc may be used. By analysis of the video recorded scene and with knowledge of the camera position and orientation and field of view size, the video image may be manipulated by the viewer remotely, as explained with reference to the receiver circuitry of Figure 2.

The camera data may be combined with the video data, as in output 184, or may be transmitted separately as in output 192.

If transmitted separately then it will be necessary to ensure synchronism between the video and camera data at the receiver in order to ensure that the camera data is correctly synchronised for each video frame. The viewer can then, for example, by identifying an object in one frame enable the system to automatically track the object through a succession of frames.

If it is required to identify one or more of the objects such as players 22,24 this may be accomplished using, for example, microwave sensing equipment 200,202, with each player being equipped with an appropriate transducer. By triangulation in unit 204, the identity and position of each player can be determined.

This information can be combined in a combiner circuit 196 with the camera data to provide information on the location and identity of each player. This combined information can be transmitted separately, as indicated by arrow 198, or could be combined with the video output 184 in combiner 18 as indicated by dotted connection 199.

With reference now to Figure 2, the receiving apparatus comprises buffer/decoder means 300 for receipt of combined video and camera data signals.

The signals are decoded into data signals on line 302 and video on line 309.

The video signals are used to display the video scene on TV monitor 306.

The camera data signals are fed to a processor 308. A control and feedback line 310 connects the TV monitor 306 to processor 308.

The processor 308 stores the camera control data relating to the video frame being displayed and the processor 308 and TV monitor 306 are synchronised via line 310. A keyboard or other input device 312 may be provided to input video information into processor 308.

Processor 308 can input video information for display on the TV monitor in accordance with a selectable programmed menu which is selectable by the viewer.

The viewer can select an object, for example, player 22 or billboard 29 either by use of a touch screen on the TV monitor or possibly by use of a laser pointer 314 or positionable *x-y* cursor or may identify the objects by voice commands or any other pointing or identification method.

The viewer can select from the programmable menu to modify the object or to display data relating to the selected object or to enable further data or visual effects to be added to an object.

An object can be tracked through a succession of video fields using the camera position and orientation and field of view size merely by identifying the objects in a first video field.

If object identification information is also transmitted then it is possible or the viewer to preselect when an object appears on a video image and for that object to be highlighted or data added etc automatically.

Thus, the transmission to the viewer of camera data synchronised to a video image enables a plurality of viewers at a plurality of remote locations to modify the video image.

In a modified version in which the camera data is transmitted, separate to the video data, this data is received in a separate buffer/decoder 320, the output of which is connected to a control input of processor 308 to enable processor 308 to modify the video image.

In a further modified version the camera data may be supplied via an Internet connection, in which case buffer/decoder 320 may also transmit data received from processor 308 as indicated by outgoing arrows 321,322. The system can then operate as a true interactive system with information being transmitted from the viewer to the broadcaster or to an intermediate party.

The transmission system via, for example, the Internet may also operate when the camera data is transmitted together with the video data into decoder 300.

Another preferred embodiments of the present invention will now be described:

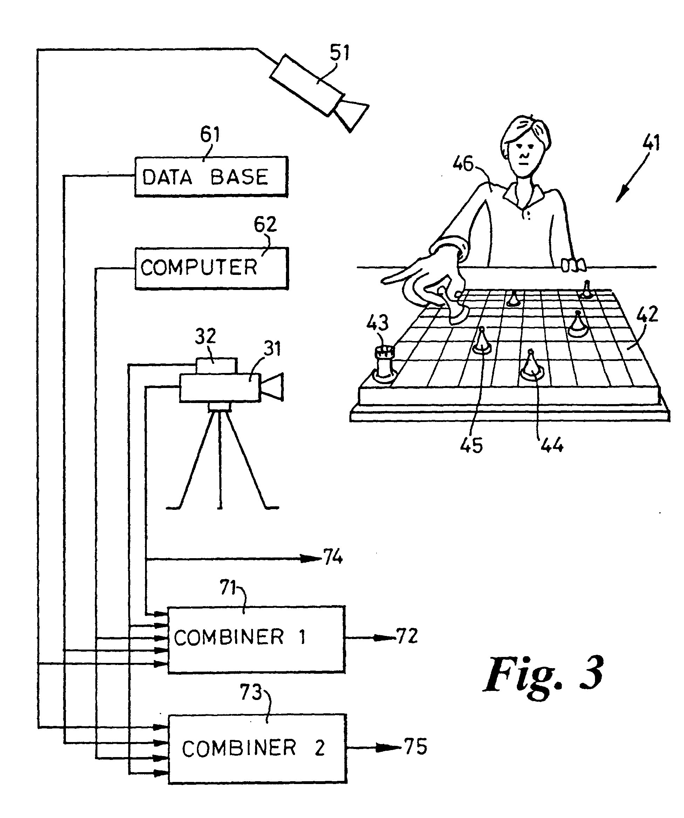

Figure 3 shows a transmission system comprising a video camera 31 which is positioned to video a scene 41 comprising a chess board 42 with playing pieces 43, 44, 45 and an opposing player 46.

The video camera 31 is preferably equipped with camera position and orientation and field of view size (position in x,y,z, pan, tilt, roll and zoom) sensor means 32 which senses the required camera camera position and orientation and field of view size as described herein before.

The system comprise an object positioning aperture 51, that detects selected objects position in space. The positioning aperture detects the position of the chess playing pieces and the opposing player.

The system comprises a data base 61 containing general information, for example historical information regarding the opposing player. The system also comprises a computerised device 62, that gives for example a computerised solution for the next chess move.

The video output 31, camera camera position and orientation and field of view size data 32, objects positioning data 51, relevant information data 61 and relevant computerised information 62 are combined together via a combiner circuit 71.

The output of combiner circuit 71 is used as a transmitted video output 72. Alternatively, the camera camera position and orientation and field of view size parameter data 32, objects positioning data 51, relevant information data 61 and relevant computerised information 62 may combined by alternative combiner circuit and transmitted separately via output 74, with the video signal 31 transmitted via video output 75.

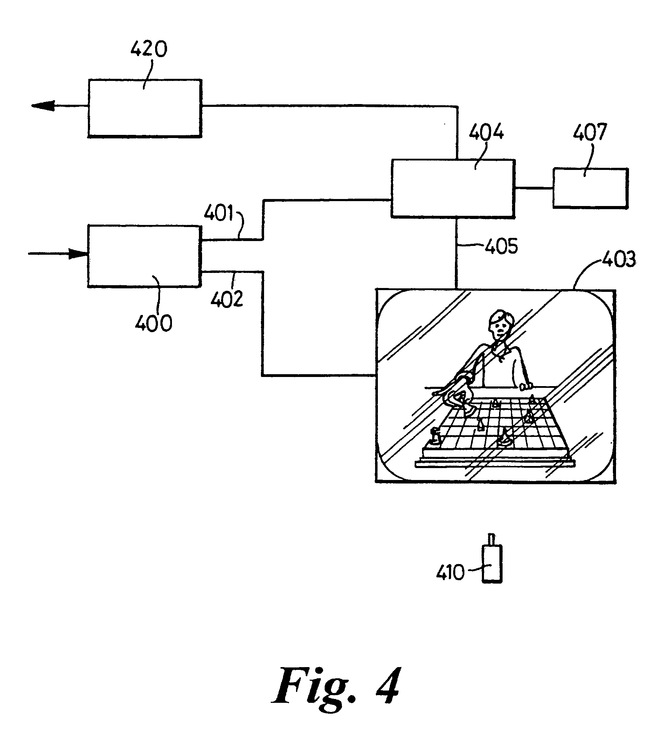

With reference now to Figure 4, the receiving apparatus comprises buffer/decoder means 400 for receipt of video, camera position and orientation and field of view size data, object positioning data, relevant information data and relevant computerised information both in the composed format transmitted via output channel 62 or in the separate channels format transmitted via output channels 63,64.

The signals are decoded into data signals on line 401 and video on line 402.

The video signals are used to display the video scene on TV monitor 403.

The camera position and orientation and field of view size data, object positioning data, relevant information data and relevant computerised information are fed to a processor 404. A control and feedback line 405 connects the TV monitor 403 to processor 404.

The processor 404 stores the camera position and orientation and field of view size data, object positioning data, relevant information data and relevant computerised information relating to the video frame being displayed and the processor 404 and TV monitor 403 are synchronised via line 405. A keyboard or other input device 407 may be provided to input video information into processor 404.

Processor 404 can input video information for display on the TV monitor in accordance with a selectable programmed menu which is selectable by the viewer.

The viewer can move a playing piece on the chess board, for example, playing piece 43 either by use of a touch screen on the TV monitor or possibly by use of a laser pointer 410 or positionable x-y cursor or may identify the objects by voice commands or any other pointing or identification method.

The viewer actions obtained from processor 404 are fed to a viewer data transmitting apparatus 420, that transmits the relevant information to the broadcaster for feedback.

In a preferred embodiment, the interactive system operates as follows.

A viewer may be asked to mark an object in the video image, for example a television show where the viewer should select the right answer from a multiple choice answers, when pressing on the chosen answer the colour of the answer may change to green in case of a correct answer and to red in case of a wrong answer. Another example can be a mathematical lesson for children where the viewer should select a pile with a correct number of balls.

In a preferred embodiment, the interactive system operates as follows.

A viewer may press on an object in the video image. The image may be of a three dimensional scene captured in real world or in a virtual set. The pressing on the object may be used for activating additional information. For examples, pressing on an historical monument can present a textural information on the monument, or in another case, pressing on an advertising billboard presented for example in sport fields may give additional information or activate an animation clip inside the video image. In another example selecting a specific actor can give us information about his clothing manufacturer, prices, list of shops where it is possible to find these clothes or even a direct link to the manufacturers web site.

In a preferred embodiment, the interactive system operates as follows.

A viewer may be asked for information, for example in relation to a player on a field or possibly a series of questions on the TV screen. By clicking on a player or answer the viewer can indicate to the broadcaster a selected item. By sending the *x-y* marked position and the video field number via additional communication channel, the apparatus at the broadcaster or at an intermediate station will know which item is being selected because the camera parameter from that video frame are known. Thus, for example, if several panel members are presenters for a program, or several artists, the viewer can select by clicking/pointing without having to telephone or otherwise communicate via a different medium.

Thus, the interactivity will be immediate. Also, if a viewer clicks on a specific player/presenter/artist/answer, information relating to that can be presented immediately to the viewer.

## Claims

1. An interactive video and television system including video camera means comprising one or more video cameras (10) for video shooting/recording a scene at an original scene location, means to identify the video cameras, means (12) for capturing the camera position and orientation and field of view size in each video field, means (200,202) for identifying the location of one or more objects (22,24) and generating data relating to the location of said one or more objects in the captured scene which are present in the scene for at least a period of time, means for recording (300) or transmitting (198) the video recorded images to enable a viewer to view the scene at a location remote from the original scene location, said means including means (308) for recording or transmitting the data relating to the camera's position and orientation and field of view size and the identity and location of said one or more objects to enable said viewer at said remote location to interrogate said data, means (308) to generate a time code to synchronise between the video image and the data related to this image.

2. An interactive video and television system as claimed in claim 1 in which the system comprises means to enable the viewer to interact with the received data, in particular means to point to objects or identify objects appearing in a three dimensional scene, or means to navigate in a three dimensional scene.

3. An interactive video and television system as claimed in claim 1 or claim 2 further comprising means to identify marked objects or points and track them with time using the received camera position and orientation and field of view size.

4. An interactive video and television system as claimed in any one of claims 1 to 3 in which the system comprises means to present additional data relating to objects in the video image or to the video image in general or any other information that was transmitted with the video image, or manipulate the video image at the request of the viewer.

5. An interactive video and television system as claimed in any one of claims 1 to 4 in which the means for identifying the location of one or more objects includes means for generating data relating to the position of an object in only a first video frame.

6. An interactive video and television system as claimed in claim 5 in which the data relating to the location of said one or more objects is transmitted together with the video signal.

7. An interactive video and television system as claimed in claim 6 in which the data is transmitted by encoding the data information into the image, for example in the vertical blanking interval in each video field.

8. An interactive video and television system as claimed in claim 6 in which the data relating to the location of said one or more objects may be transmitted separately by external means separate from the video signal via, for example, an additional transmission channel.

9. An interactive video and television system as claimed in any one of claims 1 to 8 in which the system also comprises receiving apparatus including a processor unit and a display unit that may be separate or may preferably be combined into a single unit.

10. An interactive video and television system as claimed in claim 9 in which the processing unit preferably comprises graphics, video and computational capabilities enabling combination of computer generated graphics, animation, manipulated video image or any visualisation overlays. The processing unit also enables computation of video data combined with computed information.

11. An interactive video and television system as claimed in any one of claims 1 to 10 in which the system also comprises receiving apparatus including a pointing and identification unit comprising a touch screen on the TV monitor, a laser pointer, a positionable x-y cursor or a voice recognition system.

12. An interactive video and television system as claimed in any one of claims 1 to 11 in which the receiving apparatus can transmit data relating to an object displayed on said TV to indicate a preference to a broadcaster or intermediate party.

13. An interactive video and television system as claimed in any one of claims 1 to 12 in which hidden data relating to said one or more objects is transmitted, said hidden data being accessible to a viewer only on selection of the object by the reviewer,

## Patentansprüche

1. Interaktives Video- und Fernsehsystem, mit einem Videokameramittel, das eine oder mehrere Videokameras (10) zum Videodrehen/-aufzeichnen einer Szene an einem Originalszenenort aufweist, mit Mitteln zum Identifizieren der Videokameras, mit Mitteln (12) zum Aufnehmen der Kameraposition und -orientierung und -blickfeldgröße in jedem Videofeld, mit Mitteln (200, 202) zum Identifizieren des Orts eines oder mehrerer Objekte (22, 24) und zum Erzeugen von Daten, die sich auf den Ort des einen oder der mehreren Objekte in der aufgenommenen Szene beziehen, die in der Szene für mindestens einen Zeitraum präsent sind, mit Mitteln zum Aufzeichnen (300) oder Übertragen (198) der videoaufgezeichneten Bilder, um es einem Betrachter zu ermöglichen, die Szene an einem von dem Originalszenenort entfernten Ort zu betrachten, wobei diese Mittel Mittel (308) zum Aufzeichnen oder Übertragen der Daten, die sich auf die Kameraposition und -Orientierung und -blickfeldgröße und die Identität und den Ort des einen oder der mehreren Objekte beziehen, umfassen, um es dem Betrachter an dem entfernten Ort zu ermöglichen, diese Daten abzufragen, und mit Mitteln (308) zum Erzeugen eines Zeitcodes zum Synchronisieren des Videobilds mit den Daten, die sich auf dieses Bild beziehen.

2. Interaktives Video- und Fernsehsystem nach Anspruch 1, wobei das System Mittel aufweist, die es dem Betrachter ermöglichen, mit den empfangenen Daten zu interagieren, insbesondere Mittel, um auf Objekte zu zeigen oder Objekte zu identifizieren, die in einer dreidimensionalen Szene erscheinen, oder Mittel, um in einer dreidimensionalen Szene zu navigieren.

3. Interaktives Video- und Fernsehsystem nach Anspruch 1 oder 2, das weiterhin Mittel zum Identifizieren markierter Objekte oder Punkte und zu deren Verfolgung über der Zeit unter Verwendung der empfangenen Kameraposition und -Orientierung und -blickfeldgröße aufweist.

4. Interaktives Video- und Fernsehsystem nach einem der Ansprüche 1 bis 3, wobei das System Mittel aufweist, um zusätzliche Daten zu präsentieren, die sich auf Objekte in dem Videobild oder allgemein auf das Videobild beziehen, oder irgendeine andere Information, die mit dem Videobild übertragen wurde, oder um das Videobild auf Anfrage des Betrachters zu manipulieren.

5. Interaktives Video- und Fernsehsystem nach einem der Ansprüche 1 bis 4, wobei die Mittel zum Identifizieren des Orts eines oder mehrerer Objekte Mittel zum Erzeugen von Daten umfassen, die sich auf die Position eines Objekts nur in einem ersten Videoeinzelbild beziehen.

6. Interaktives Video- und Fernsehsystem nach Anspruch 5, wobei die Daten, die sich auf den Ort des einen oder der mehreren Objekte beziehen, zusammen mit dem Videosignal übertragen werden.

7. Interaktives Video- und Fernsehsystem nach Anspruch 6, wobei die Daten durch Codieren der Dateninformationen in das Bild übertragen werden, z.B. in der vertikalen Austastlücke in jedem Videofeld.

8. Interaktives Video- und Fernsehsystem nach Anspruch 6, wobei die Daten, die sich auf den Ort des einen oder der mehreren Objekte beziehen, durch externe Mittel, beispielsweise einen zusätzlichen Sendekanal, getrennt von dem Videosignal separat übertragen werden können.

9. Interaktives Video- und Fernsehsystem nach einem der Ansprüche 1 bis 8, wobei das System auch einen Empfangsapparat aufweist, der eine Prozessoreinheit und eine Wiedergabeeinheit umfasst, die getrennt oder vorzugsweise in eine einzige Einheit kombiniert sein können.

10. Interaktives Video- und Fernsehsystem nach Anspruch 9, wobei die Verarbeitungseinheit vorzugsweise Graphik-, Video- und Berechnungsfähigkeiten aufweist, die eine Kombination von computererzeugten Graphiken, Animationen, manipulierten Videobildern oder jeglichen Visualisierungseinblendungen ermöglicht. Die Verarbeitungseinheit ermöglicht auch die Berechnung von Videodaten kombiniert mit berechneten Informationen.

11. Interaktives Video- und Fernsehsystem nach einem der Ansprüche 1 bis 10, wobei das System auch einen Empfangsapparat aufweist, der eine Zeige- und Identifikationseinheit umfasst, welche einen Touchscreen auf dem Fernsehmonitor, einen Laserpointer, einen positionierbaren x-y-Cursor oder ein Spracherkennungssystem aufweist.

12. Interaktives Video- und Fernsehsystem nach einem der Ansprüche 1 bis 11, wobei der Empfangsapparat Daten übertragen kann, die sich auf ein Objekt, das auf dem Fernseher angezeigt wird, beziehen, um einem Sender oder einer zwischengeschalteten Partei eine Präferenz anzuzeigen.

13. Interaktives Video- und Fernsehsystem nach einem der Ansprüche 1 bis 12, wobei versteckte Daten, die sich auf eines oder mehrere Objekte beziehen, übertragen werden, wobei diese versteckten Daten einem Betrachter nur nach Auswahl des Objekts durch einen Kontrolleur zugänglich sind.

## Revendications

1. Système de vidéo et de télévision interactif présentant des moyens de caméra vidéo comprenant une ou plusieurs caméras vidéo (10) pour tourner/enregistrer en vidéo une scène à un emplacement de tournage d'origine, des moyens pour identifier les caméras vidéo, des moyens (12) pour saisir la position, l'orientation et la taille du champ de vision de la caméra dans chaque champ vidéo, des moyens (200, 202) pour identifier l'emplacement d'un ou de plusieurs objets (22, 24) et générer des données concernant l'emplacement desdits un ou plusieurs objets dans la scène saisie qui sont présent dans la scène pendant au moins une période de temps, des moyens pour enregistrer (300) ou transmettre (198) les images vidéo enregistrées pour permettre à un spectateur de voir la scène à un emplacement distant de l'emplacement de la scène d'origine, lesdits moyens comprenant des moyens (308) pour enregistrer et transmettre les données concernant la position, l'orientation et la taille du champ de vision de la caméra et l'identité et l'emplacement desdits un ou plusieurs objets pour permettre audit spectateur se trouvant au dit emplacement distant d'interroger lesdites données, des moyens (308) de générer un base de temps pour synchroniser l'image vidéo et les données concernant cette image.

2. Système de vidéo et de télévision interactif selon la revendication 1, dans lequel le système comprend des moyens pour permettre au spectateur d'intervenir sur les données reçues, en particulier des moyens pour pointer des objets ou identifier des objets apparaissant dans la scène tridimensionnelle ou des moyens de naviguer dans la scène tridimensionnelle.

3. Système de vidéo et de télévision interactif selon la revendication 1 ou 2, comprenant en outre des moyens pour identifier des objets marqués ou des points et les suivre dans le temps en utilisant la position, l'orientation et la taille du champ de vision de la caméra reçus.

4. Système de vidéo et de télévision interactif selon l'une quelconque des revendications 1 à 3, dans lequel le système comprend des moyens pour présenter des données supplémentaires concernant les objets dans l'image vidéo ou l'image vidéo en général ou toute autre information qui a été transmise avec l'image vidéo ou manipuler l'image vidéo à la demande du spectateur.

5. Système de vidéo et de télévision interactif selon l'une quelconque des revendications 1 à 4, dans lequel les moyens pour identifier l'emplacement d'un ou de plusieurs objets comprennent des moyens de génération de données concernant la position d'un objet dans un premier cadrage vidéo uniquement.

6. Système de vidéo et de télévision interactif selon la revendication 5, dans lequel les données concernant l'emplacement desdits un ou plusieurs objet sont transmises avec le signal vidéo.

7. Système de vidéo et de télévision interactif selon la revendication 6, dans lequel les données sont transmises en codant les informations de données dans l'image, par exemple dans l'intervalle de supression vertical de chaque champ vidéo.

8. Système de vidéo et de télévision interactif selon la revendication 6, dans lequel les données concernant l'emplacement desdits un ou plusieurs objets peuvent être transmises séparément par des moyens extérieurs aux signal vidéo grâce, par exemple, à un canal de transmission supplémentaire.

9. Système de vidéo et de télévision interactif selon une quelconque des revendications 1 à 8, dans lequel le système comprend également un appareil de réception comprenant une unité de traitement et une unité d'affichage qui peuvent être séparées ou peuvent de préférence être associées dans une unité unique.

10. Système de vidéo et de télévision interactif selon la revendication 9, dans lequel l'unité de traitement comprend de préférence des fonctions graphiques, vidéo et de calcul permettant la combinaison de graphiques générés par ordinateur, d'animation, d'images vidéo manipulées ou de toutes superpositions de visualisation. L'unité de traitement permet également le calcul des données vidéo combinées avec des informations calculées.

11. Système de vidéo et de télévision interactif selon l'une quelconque des revendications 1 à 10, dans lequel le système comprend également un appareil de réception comprenant une unité de pointage et d'identification comportant un écran tactile sur le téléviseur, un pointeur laser, un curseur x-y réglable ou un système de reconnaissance vocale.

12. Système de vidéo et de télévision interactif selon l'une quelconque des revendications 1 à 11, dans lequel l'appareil de réception peut transmettre des données concernant un objet affiché sur ledit téléviseur pour indiquer une préférence à un producteur ou un intermédiaire.

13. Système de vidéo et de télévision interactif selon l'une quelconque des revendications 1 à 12, dans lequel des données cachées concernant lesdits un ou plusieurs objets sont transmises, lesdites données cachées étant accessibles au spectateur uniquement par la sélection de l'objet par le vérificateur.
